# EUROPEAN PATENT APPLICATION

(11) **EP 2 581 691 A1**
(43) Date of publication of application: **17.04.2013**
(21) Application number: 11425250.5
(22) Date of filing: 12.10.2011
(51) Int. Cl.: F25B 7/00, F25B 13/00

(54) **Heat pump optimized for execution of cascade refrigeration cycles and for summer operation**

(71) Applicant: Thermocold Costruzioni SrL, 70026 Modugno (BA) (IT)
(72) Inventor: Renna, Giuseppe Giovanni, 70126 Bari (IT)
(74) Representative: Bruni, Giovanni

(57) **Abstract**

Machine for ambient heating and refrigeration and for the production of sanitary hot water, able to provide a vapour compression cycle or two cascade vapour compression cycles, comprising an inner unit which comprises at least a heat exchanger able to exchange heat with the outer unit, and two heat exchangers for the users and an outer unit which comprises a heat exchanger able to exchange heat with the outside. The machine is able to provide heat or cold for the ambient air-conditioning and heat for the production of hot water for sanitary use and further comprises another heat exchanger connected to the outer unit and to the user circuit, configured so that said outer unit is allowed to function as a vapour compression machine of traditional type between the heat exchangers which exchange heat with the outside and the user.

## Description

The present invention relates to a machine for performing a vapour compression refrigerating cycle apt to provide heat to the user for ambient heating or for the production of sanitary hot water or for subtracting heat to guarantee the ambient refrigeration, which is particularly efficient at working with considerable temperature differences and possibly with particularly low outer temperatures, but which is however able to optimize the performances in a mode of sole refrigeration. The present applicant has yet contributed to the realization of vapour compression machines able to work with considerable temperature differences and with particularly low outer temperatures. In the patent application EP 11425041, the present applicant described and claimed a machine for the production of heat for ambient heating and for the production of sanitary hot water, as well as for the ambient refrigeration, also at the same time of the production of hot water. In the machine described, there are used two cascade refrigerating cycles, provided by means of a particularly simplified circuit.

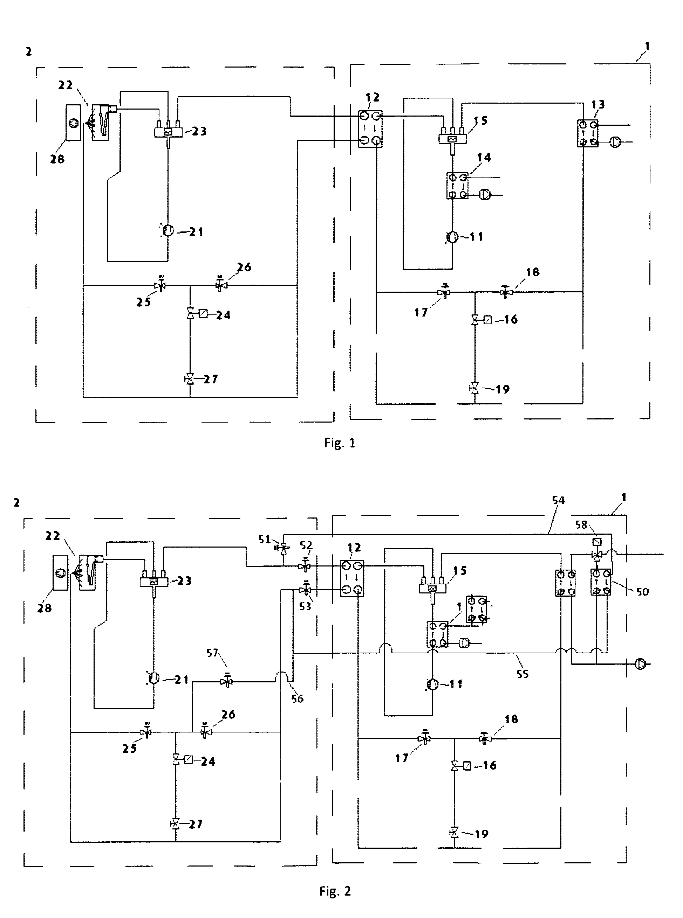

While the described machine allows to use two different working fluids with optimized performances for the temperatures for which the two cascade cycles are designed, and also to house the elements in two distinct units, so that only elements able to support particularly low temperatures are installed outside, it has however a drawback linked to the functioning in mode of sole cold production for ambient refrigeration. According to the circuit scheme described in the patent application EP 11425041, and here shown in figure 1, the only exchanger serving the ambient heating and refrigeration is the one indicated with 13 in figure 1, which acts as condenser or evaporator according to the cycle functioning mode. This means that it is not possible to exclude the inner unit (1) from the functioning. Consequently, this limits the energetic maximum efficiency obtainable in summer functioning, since for the functioning of the machine it is needed the use of two cascade cycles, the heat in excess with respect to the one needed by the exchanger (14) for the production of sanitary hot water, being disposed of outside through the double passage in the exchangers (12) and (22) also in conditions in which it would be sufficient and more efficient the use of only one vapour compression cycle.

Object of the present invention is therefore to provide a refrigerating machine able to maintain all the known advantages of the machines known at the state of the art operating two cascade refrigerating cycles, and to produce simultaneously ambient heating or refrigeration and hot water for sanitary use, but which is also able to refrigerate ambient operating only one vapour compression cycle, when this is more convenient in energy terms.

The object of the present invention solves the prefixed aims since it is a refrigerating machine for performing cascade cycles, which with respect to what is known at the state of the art is characterized by the provision of another heat exchanger serving the users, as it is better described in the following.

These and other advantages will be clearer from the description which refers to the appended drawings 1 to 2.

In figure 1 it is shown a plant scheme known at the state of the art, taken from the patent application EP 11425041;
in figure 2 it is shown the plant scheme of a preferred embodiment of the object of the present invention.

As it is shown in figure 1, the circuit which provides the refrigerating cycle contained in the machine known at the state of the art is made up of two units, an inner unit (1) where it is performed the cycle which allows the production of water for the heating, of sanitary hot water and refrigerating water and an outer one (2) in which it is performed the lower cycle which exchanges heat with the outer air.

The inner unit (1) comprises at least a compressor (11), at least an exchanger able to exchange heat with the outer unit (12), an exchanger serving the users for heating/refrigerating (13) and a recuperative exchanger for heating the sanitary hot water (14), a cycle inverting valve (15), a throttle valve (16) and three valves (17, 18 and 19), in addition to all the elements needed to guarantee the correct functioning of machines performing vapour compression cycles known at the state of the art and therefore not described in detail.

As a way of not limiting example, when this unit functions with refrigerating gas R134A it can reach condensing temperatures of 85°C starting from evaporating temperatures up to 15°C, with maximum pressures about 30 bar.

The outer unit (2) comprises at least a compressor (21), a heat exchanger (22) able to give or absorb heat from the outer air or other thermal well, such as for example ground water, superficial water or ground. Such exchanger can be constituted by a finned and aerated battery by means of a fan (28) or by one plate or tube bundle exchanger with inverter controlled pump. The outer unit comprises moreover a cycle inverting valve (23), a throttle valve (24), three valves (25, 26, 27) and shares the heat exchanger (12) with the inner unit.

As a way of not limiting example, this unit can work with gas R410A and can function with very low outer temperatures of the air, up to -20°C, which imply evaporating temperatures about -25°C and condensing temperatures about 30°C. The working pressure range is approximately between 3 and 20 bar.

The refrigerating machine thus realized can provide different kinds of cycles, according to the momentary user needs, useful to provide heat or cold to the user served by the exchanger (13) and heat for the production of sanitary hot water to the recuperative exchanger (14). The passage from the one to the other functioning mode occurs by suitably actuating the two cycle inverting valves (15) and (23) and the valves (17, 18, 19, 25, 26, 27).

In particular, when the user needs the sole production of cold for the ambient heating, the machine works in chiller mode. In this functioning mode the exchanger (13) acts as evaporator. The heat exchanger (12) acts as condenser for the superior cycle operated by the inner unit (1) and as evaporator for the inferior cycle operated by the outer unit (2), which disposes of the heat in the finned battery (22), or plate o tube bundle exchanger which in this functioning mode functions as condenser.

It is clear that the two cascade refrigerating cycles need to be used for the production of sole heat. However, this is not always convenient and in particular it is not convenient when the temperature difference between the condensing temperature and the evaporating one is not very high. In fact, when said temperature difference diminishes, the cycle compression ratio diminishes up to the point in which the problems caused by the fact that a double thermal exchange is needed, exceed the benefits brought by the performance of two cascade cycles, and it is therefore convenient to operate only one vapour compression cycle.

The innovation provided by the machine according to the present invention is clear in figure 2, where it is shown how to the plant scheme known at the state of the art of figure 1 is added another heat exchanger (50), dedicated to the sole cold production, which is used to exclude completely the inner unit (1) from the functioning. This heat exchanger (1) acts as evaporator of the cycle operated in the outer unit (2) and it is connected by means of two lines (54, 55) which can be intercepted by two solenoid valves (51, 53) at the outer unit (2). Another solenoid valve (52) allows to exclude the exchanger (12) from the functioning of the outer unit. In this way with the solenoid valve (52) closed, and the solenoid valves (51) and (53) open, in place of the exchanger (12), the exchanger (50) is introduced in the cycle of the outer unit. The user circuit is at the same time switched by the exchanger (13) to the exchanger (50) by means of the three way solenoid valve (58). The intermediate exchanger (12) can be emptied by means of a line (56) intercepted by the solenoid valve (57), remained open for empting the circuit. In this way for the production of cold, the outer unit can function as a traditional refrigerating machine, with the condenser outside and the evaporator at the user, while for the production of heat and cold combined or of only heat, the machine can work according to what is known at the state of the art, exploiting conveniently the possibility to carry out two cascade cycles and to condense, if needed, on the exchanger serving the production of sanitary hot water.

The functioning modes different from the chiller mode keep being carried out in as in the machine known at the state of the art, excluding in this case the exchanger (50) from the functioning, according to the following table, where it is reported as state 1, the one just described.

| state | Machine mode | Inner unit mode | Outer unit mode |
|---|---|---|---|
| 1 | Chiller | Excluded | Chiller |
| 2 | Pdc | Pdc "water-gas" | Pdc |
| 3 | Chiller + Rec | Chiller + Rec | OFF |
| 4 | Rec | sanitary Pdc | Pdc |

In the mode functioning indicated by numbers 2 and 4, in particular the useful effect is the provision of heat to the sole exchanger (13) for ambient heating or to the sole exchanger (14) for the production of sanitary hot water.

These two functioning modes can be shown together, since the only difference is in the activated circulation pump; if the need is for ambient heating, then it will be activated the circulation pump (34) on the exchanger (13), if the need is for the production of sanitary hot water it will be activated the circulation pump (35) on the recuperative exchanger (14).

The rotation speed of the compressor (11) of the inner unit (1) will be adjusted according to the temperature read by the feeler (31) or (36) positioned on the exchangers (13) and (14), according to the user to be satisfied. The rotation speed of the compressor (11) will be set at maximum up to reaching the temperature set-point on the feeler (31) or (36). When the set point is reached, the compressor (11) is switched off, until the value indicated by the readings of the feelers interested is maintained in a pre-adjusted tolerance range. When the reading on the feeler (31) or (36) goes outside such range, the compressor (11) is switched on again with rotation speed proportional to the derivative with respect to the temperature reading time, i.e. to the slope of the temperature curve in the temperature/time graph. If the value of the temperature derivative with respect to the the time tends to zero, the compressor (11) is actuated only if outside the tolerance range at the minimum speed. If the value of the derivative of the temperature with respect to the time tends to increase the compressor (11) is actuated with initial speed fraction of the maximum one (ex. 50%) and such speed is increased at pre-determined time intervals according to the derivative with respect to the time of the temperature, detected at constant time intervals. The outer unit (2) in this functioning mode is adjusted so that the evaporating pressure of the inner unit (1) in the exchanger (12), measured by means of the feeler (37), is maintained constant. The adjustment occurs with the rotation speed of the compressor (21) and of the fans (28) initially at maximum value. In case the system provides in place of the finned battery a plate or tube bundle exchanger, the adjustment occurs similarly by means of the circulation pump. According to the evaporating pressure at the exchanger (12), it is reduced firstly the rotation speed of the compressor (21) up to the lower limit of the adjustment range, and next the rotation speed of the fan (28) up possibly to its complete switching off. Also in this case the modulation, after reaching the set value of evaporation pressure, is carried out in differential way. When the evaporating pressure goes under the low limit of the tolerance range, firstly the fan (28) and then the compressor (21) are activated again at constant but always more frequent speed increments. The adjustment occurs according to the derivative with respect to the time of the evaporation pressure at the exchanger (12) detected at regular time intervals by the feeler (37).

The functioning mode 3 is activated when the contemporaneous request of cold occurs at the exchanger (13) for the summer ambient air-conditioning and of heat at the exchanger (14) for the production of sanitary hot water.

In this particular cycle, intermediate between the heat pump and the chiller, the outer unit (2) remains off and the inner unit (1) works in water/water mode. The exchanger (13) acts as evaporator, and the exchanger (12) in not in this case interested by the cycle, since the inner unit (1) condenses on the recuperative exchanger (14) and the outer unit (2) is off.

The management of the rotation speed of the compressor (11) of the inner unit (1) is identical to the one defined for the functioning mode 2. The rotation mode is adjusted in fact according to the set set-point for the temperature read by the feeler (31), at whose reaching the compressor (11) is stopped. After the deviation from the set-point value, the compressor (11) is activated again with speed varying in proportional way to the derivative with respect to the time of the temperature detected by the feeler (31), according to what is shown.

It is to be noted that, when the machine works in the just described chiller mode plus recovery, if the thermal request profiles of the two hot and cold users cannot be overlapped, the machine can work in chiller mode or in heat pump mode.

As just described, according to the cycle which the inner unit (1) is carrying out, also the outer machine can vary the functioning cycle, allowing the exchanger (12) to act alternatively as condenser or evaporator for the inner unit (1), with the clear advantage to carry out with the same machine a series of different cycles with the minor possible number of heat exchangers, valves and other elements.

The machine according to the present invention allows to optimize the choice of the refrigerants, thus allowing the working pressures to be controlled. For example, the choice of the refrigerant R410A in the first cycle allows even for very low temperatures of outer air, approximately up to -25°C, not to go under pressures lower than 1 bar, considering that the maximum condensation temperatures to be reached by the first cycle do not exceed 30°C.

According to an embodiment shown in figure 3, the machine according to the present invention can be realized with the inner and outer functional units separated. Such an embodiment is particularly indicated for applications in places where the outer temperatures can reach particularly low values, lower than -10°C. In fact, in this configuration the elements constituting the inner unit (1) and comprising all the exchangers where the provided thermo-vector fluids are treated are protected against the outer low temperatures and the danger of fluid freezing in the pipes. In figure 4 it is shown as a way of not limiting example a possible introducing in the system of a residential building of the machine according to the present invention, with the heat exchanger (13) serving a heating system with radiant panels (41) supplied by the accumulation tank (42) and the heat exchanger (14) serving the delivering system of water for sanitary use supplied by the tank (43) in which also the heat collected by the solar panels (44) is stored.

According to another embodiment the machine according to the present invention can be realized with the inner and outer functional units enclosed in a sole equipment to be installed outside, thus reducing at minimum the inner space of the building needed for the installation. This embodiment has clear advantages in places where the temperatures can be considered constantly higher than -10°C.

As described, the device object of the present invention allows to operate in an efficient way and with a reduced number of elements, possibly integrated in a sole unit, all the refrigerating cycles required by the summer and winter ambient air-conditioning and by the production of sanitary hot water. In addition, it was described a management logic of the device object of the present invention which allows to manage in a particular simple way the functioning of the two units constituting the device in the different functioning conditions.

Above all there have been highlighted the advantages deriving from the introduction of the heat exchanger (50) in the circuit, able to optimize the energy efficiency in chiller mode.

It is intended that to the circuit of the refrigerating machine according to the present invention all the variations convenient for those skilled in the art can be made, without departing from the aims of the present invention, as defined by the following claims.

## Claims

1. Machine for ambient heating and refrigeration and for the production of sanitary hot water, able to provide a vapour compression cycle or two cascade vapour compression cycles, comprising at least:
- an inner unit (1) and an outer unit (2),
said inner unit (1) comprising at least
- a heat exchanger (12) able to exchange heat with said outer unit (2),
- two heat exchangers (13, 14) configured so that they exchange heat with user circuits,
and said outer unit (2) comprising at least
- a heat exchanger able to exchange heat with the outside (22),
- and said heat exchanger (12) able to exchange heat with said inner unit (1),
able to serve a plurality of users delivering by means of said heat exchangers (13, 14) of said inner unit (1), according to the needs, heat or cold for the ambient air-conditioning and for the production of hot water for sanitary use
**characterized in that**
said machine further comprises another heat exchanger (50) connected to said outer unit (2) and at least a user circuit, configured so that said outer unit (2) is allowed to function as a vapour compression machine of traditional type between the heat exchangers which exchange heat with the outside (22) and the user (50).

2. Machine for ambient heating and refrigeration and for the production of sanitary hot water according to claim 1, **characterized in that** said inner unit (1) and said outer unit (2) further comprise a compressor, a throttle valve and a cycle inverting valve, each.

3. Machine for ambient heating and refrigeration and for the production of sanitary hot water according to claim 1 or 2, **characterized in that** said heat exchanger (50) is connected to the circuit of said outer unit by means of two ducts (54, 55), connected on the inlet and outlet pipes from the compressor side (21) of said heat exchanger (12) and which can be intercepted by means for two solenoid valves (51, 53) which, actuated together with another solenoid valve (52) arranged on the feeding of said heat exchanger (12) downstream of the connection with said duct (54), allow to exclude alternatively said exchanger (12) or said exchanger (50) from the circuit.

4. Machine for ambient heating and refrigeration and for the production of sanitary hot water according to any one of the preceding claims, **characterized in that** a three way solenoid valve (58) on the user circuit allows to switch the user circuit on the exchanger (13) or on the exchanger (50).
